# EUROPÄISCHE PATENTSCHRIFT

(11) **EP 4 247 513 B1**
(45) Veröffentlichungstag und Bekanntmachung des Hinweises auf die Patenterteilung: **12.06.2024**
(21) Anmeldenummer: 21807013.4
(22) Anmeldetag: 04.11.2021
(51) Int. Cl.: B01D 29/96, B01D 35/147, B01D 35/153

(54) **ANSCHLUSSBAUGRUPPE FÜR EINEN WASSERFILTER**
CONNECTING ASSEMBLY FOR A WATER FILTER
ENSEMBLE DE RACCORDEMENT POUR FILTRE À EAU

(30) Priorität: 17.11.2020 DE 102020130284
(43) Veröffentlichungstag der Anmeldung: 27.09.2023
(73) Patentinhaber: BWT Holding GmbH, 5310 Mondsee (AT)
(72) Erfinder: JOHANN, Jürgen, 69226 Nußloch (DE); ENZINGER, Markus, 5303 Thalgau (AT)
(74) Vertreter: Friderichs, Gunther
(86) Internationale Anmeldenummer: PCT/EP2021/080619
(87) Internationale Veröffentlichungsnummer: WO 2022/106213

(56) Entgegenhaltungen:
- DE-T2- 60 125 914
- JP-A- H03 123 689
- US-A1- 2008 164 220
- US-A1- 2018 140 980

## Beschreibung

### Gebiet der Erfindung

Die Erfindung betrifft eine Anschlussbaugruppe für einen Wasserfilter

### Hintergrund der Erfindung

Wasseraufbereitungseinrichtungen, insbesondere solche, die in eine bauseitig vorhandene, unter Druck stehende Wasserleitung eingebaut werden, sind bekannt.

So wird beispielsweise von der Anmelderin unter dem Markennamen "Bestmax" ein System vertrieben, bei welchem eine Filterkerze in einen Filterkopf, welcher an eine bauseitige Leitung angeschlossen ist, eingeschraubt wird.

Derartige Systeme werden insbesondere in Haushalt und Gastronomie zur Aufbereitung von Trinkwasser verwendet. Insbesondere kann das hierfür verwendete Wasser in Automaten zur Heißgetränkezubereitung verwendet werden. Die entsprechenden Filterkerzen können hierzu insbesondere mit einem Ionenaustauschermaterial befüllt sein, um das Wasser zu enthärten.

Derartige Filterkerzen sind bequem einsetzbar. So ist ein derartiges System bereits mit einem automatisch schließenden Ventil und einer Rücklaufsicherung versehen, so dass der Benutzer lediglich die Filterkerze austauschen muss, ohne dass es dazu erforderlich ist, einen Zulauf der Wasserleitung abzusperren.

Dennoch erfordert das Einschrauben einen gewissen Aufwand und ist nicht mit einem einzigen Handgriff zu erledigen. Herkömmliche Filterkerzen sind zudem mit einem relativ teuer herzustellenden Gehäuse versehen und umfassen, da beide Anschlüsse sich auf einer Seite befinden, ein Fallrohr, welches sich durch die Filterkerze erstreckt.

Filtervorrichtungen sind aus den Dokumenten DE 601 25 914 T2, JP 03123689 A, US 2018/0140980 A1 und US 2008/0164220 A1 bekannt.

### Aufgabe der Erfindung

Gegenüber dem eingangs genannten Stand der Technik liegt der Erfindung demgegenüber die Aufgabe zugrunde, den Austausch einer Wasseraufbereitungseinrichtung noch einfacher zu gestalten und/oder eine Wasseraufbereitungseinrichtung bereitzustellen, deren Gehäuse sich einfacher und preiswerter fertigen lässt.

### Zusammenfassung der Erfindung

Die Erfindung betrifft eine Anschlussbaugruppe für einen Wasserfilter.

Unter einem Wasserfilter im Sinne der Erfindung werden nicht nur Filter zur Entfernung von Schwebstoffen, sondern sämtliche Arten von Wasseraufbereitungsfiltern verstanden, insbesondere solche, die mit einem Ionenaustauschermaterial, Aktivkohle oder mit einem bioziden Kontaktmaterial befüllt sind. Unter einem "bioziden Kontaktmaterial" werden Materialen verstanden, welche beim Kontakt mit Wasser eine bakterizide und/oder fungizide und/oder algizide Wirkung haben.

Weiterhin können hier auch UV-Lampen oder Ultra- und Mikrofilter verwendet werden.

Die Anschlussbaugruppe dient dem bauseitigen Anschluss, insbesondere an eine bauseitig vorhandene Wasserleitung.

Die Anschlussbaugruppe umfasst hierzu einen Eingang und einen Ausgang.

Insbesondere ist die Anschlussbaugruppe dazu vorgesehen, strömungsseitig vor einem Wasserhahn und/oder einer Maschine zur Zubereitung von Getränken, insbesondere Heißgetränken, angeordnet zu sein.

Der Wasserfilter umfasst ein Gehäuse, welches der Anordnung des Filtermediums dient.

Der Wasserfilter umfasst vorzugsweise zwei als Rohrstücke ausgebildete, auf einer Achse gegenüberliegende Anschlüsse, welche auf den beiden gegenüberliegenden Seiten des Gehäuses des Wasserfilters angeordnet sind.

Um den Wasserfilter anzuschließen, umfasst erfindungsgemäß die Anschlussgruppe zwei sich auf einer Achse gegenüberliegende Anschlussstücke, wobei zumindest ein Anschlussstück über ein Betätigungsorgan axial verschiebbar ausgebildet ist, um den Wasserfilter anzuschließen und gleichzeitig zu fixieren.

Die erfindungsgemäße Ausgestaltung der Anschlussbaugruppe sieht also vor, dass der Wasserfilter lediglich axial ausgerichtet zwischen den Anschlussstücken platziert werden muss und dass sodann die Anschlussstücke durch Verschieben vorzugsweise eines der Anschlussstücke aufeinander zubewegt werden, um den Wasserfilter anzuschließen und gleichzeitig zumindest senkrecht zu seiner Achse, die durch die Mittelachse der Rohrstücke definiert wird, festzuhalten.

Die Abschlussbaugruppe umfasst also zumindest ein Gehäuse zum Anschluss an eine Wasserleitung, zwei Anschlussstücke für den Wasserfilter sowie ein Betätigungsorgan zum Entriegeln des Wasserfilters zwecks dessen Austausche.

Erfindungsgemäß ist das Betätigungsorgan drehbar ausgebildet, wobei eine Drehbewegung des Betätigungsorgans in eine Axialverschiebung des Anschlussstücks umgesetzt wird.

Dabei wird die Drehbewegung über eine Führungskulisse in die Axialverschiebung umgesetzt.

Als Führungskulisse kann insbesondere eine schräg zum Betätigungsorgan stehende Nut verwendet werden.

Die Bereitstellung der Axialverschiebung über eine Führungskulisse ermöglicht es gemäß der Erfindung, dass das Betätigungsorgan zum Öffnen oder Schließen der Anschlussbaugruppe jeweils um weniger als 360°, vorzugsweise weniger als 180° und besonders bevorzugt weniger als 150°, gedreht werden muss.

So ist eine einfache Bedienung von einer Seite ausgehend sichergestellt.

Vorzugsweise wird das Betätigungsorgan zum Öffnen oder Schließen aber mehr als 20°, bevorzugt mehr als 50° und besonders mehr als 90°, verdreht.

So kann ein hinreichend großer Hub bei gleichzeitig leichter Bedienbarkeit bereitgestellt werden.

Der Hub, also die Axialverschiebung des Anschlussstücks, beträgt vorzugsweise zwischen 1 und 30 mm, besonders bevorzugt zwischen 10 und 25 mm.

Die Anschlussstücke sind vorzugsweise an der Stirnseite konisch ausgebildet. So zentrieren sich die Anschlussstücke selbständig, wenn sie in die als Rohrstück ausgebildeten Anschlüsse des Wasserfilters eintauchen.

Die Anschlussstücke sind vorzugsweise gegenüber den Anschlüssen des Filters über eine Radialdichtung abgedichtet.

Insbesondere kann als Radialdichtung das Anschlussstück einen in einer Nut des Rohrstücks sitzenden O-Ring aufweisen.

Durch eine Radialdichtung reicht filterseitig ein einfach ausgestaltetes Rohrstück.

Des Weiteren werden durch die Radialdichtung Form- und Lagetoleranzen ausgeglichen. Insbesondere spielen leichte Unterschiede in der Länge des Wasserfilters keine Rolle.

Bei einer Weiterbildung der Erfindung umfasst das Anschlussstück, welches den Eingang des Wasserfilters bildet, ein Ventil, welches beim Verriegeln des Wasserfilters geöffnet wird.

Es ist insbesondere vorgesehen, dass das Anschlussstück, welches nicht über das Betätigungsorgan axial verschoben wird, seinerseits axial verschiebbar ausgebildet ist sein kann.

Beim Verriegeln des Wasserfilters kann so insbesondere durch die Axialverschiebung der Wasserfilter dichtend mit den Anschlussstücken verbunden werden.

Sodann ist der Wasserfilter derart eingespannt, dass die Enden der Rohrstücke auf einen Anschlag stoßen.

Eine weitere Axialverschiebung durch Drehen des Betätigungsorgans bewirkt nunmehr, dass das Ventil geöffnet wird, während der Wasserfilter bereits dichtend angeschlossen ist.

Umgekehrt ist beim Entnehmen des Wasserfilters das Ventil bereits geschlossen, wenn die Anschlussstücke soweit auseinandergefahren sind, dass der Wasserfilter entnommen werden kann.

Ein gegen eine Federkraft beweglicher Ventilkörper spannt gleichzeitig den Wasserfilter ein und gleich Längentoleranzen aus.

Bei einer Ausführungsform der Erfindung ist ein Anschlussstück des Eingangs des Wasserfilters zusammen mit dem Betätigungsorgan drehbar ausgebildet.

Das Anschlussstück des Ausgangs des Wasserfilters kann mit dem Ausgang der Anschlussbaugruppe verbunden sein, insbesondere über einen Wasserzähler.

Das Betätigungsorgan kann ein drehbares Ringelement umfassen.

Dieses kann insbesondere als Kreiszylinder ausgebildet sein, wobei das Anschlussstück in einer sich radial im Ringelement erstreckenden Wand angeordnet ist.

Das Ringelement kann insbesondere im Wesentlichen topfförmig mit einem mittigen Anschlussstück ausgebildet sein.

Vorzugsweise umfasst das Betätigungsorgan einen sich radial erstreckenden Hebel, um dieses auf einfache Weise verdrehen zu können.

Das strömungsseitig hinter dem Anschlussstück des Ausgangs des Wasserfilters angeordnete Anschlussstück umfasst bei einer bevorzugten Ausführungsform der Erfindung eine Rücklaufsperre.

So wird vermieden, dass strömungsseitig hinter der Anschlussbaugruppe vorhandenes Wasser, welches sich in den Leitungen befindet, beim Filterwechsel austritt.

Die Rücklaufsperre befindet sich vorzugsweise unmittelbar hinter dem ausgangsseitigen Anschlussstück für den Wasserfilter.

Die Erfindung betrifft des Weiteren ein Wasserfilter mit einer Anschlussbaugruppe, wie sie vorstehend beschrieben wurde.

Die Erfindung betrifft insbesondere eine Anschlussbaugruppe mit einem Wasserfilter, welche unter Tisch montierbar ist.

### Kurzbeschreibung der Zeichnungen

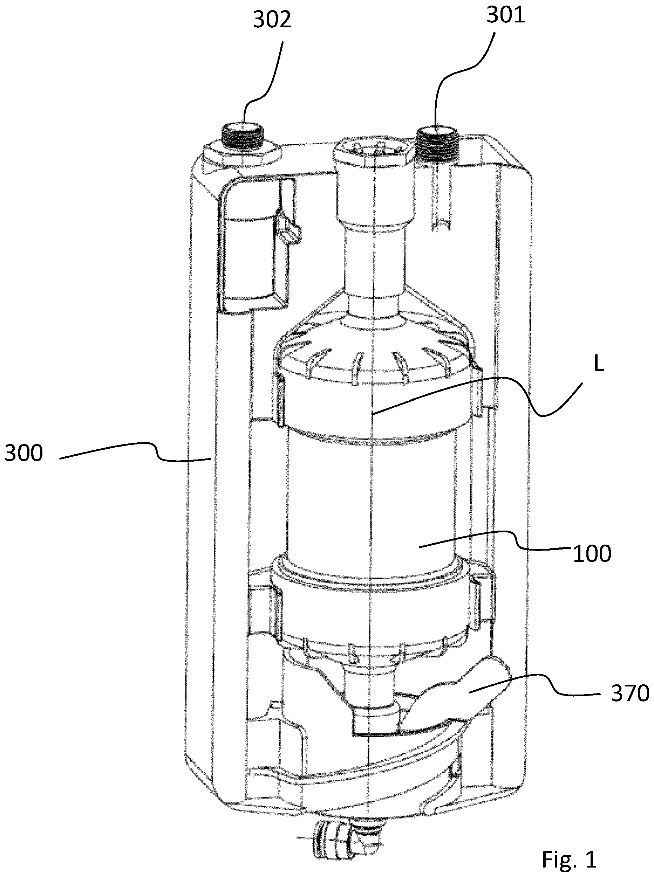

Der Gegenstand der Erfindung soll im Folgenden bezugnehmend auf ein Ausführungsbeispiel anhand der Zeichnungen Fig. 1 bis Fig. 12 näher erläutert werden.

Grundsätzlich dargestellt ist eine Anschlussbaugruppe, welche mit zumindest einer Wasseraufbereitungseinrichtung, insbesondere einem Wasserfilter 100 koppelbar ist.
Fig. 1 ist eine perspektivische Ansicht der Anschlussbaugruppe mit Wasserfilter.
Fig. 2 zeigt die Anschlussbaugruppe ohne Wasserfilter.
Fig. 3 ist eine perspektivische Rückansicht.
Fig. 4 und Fig. 5 sind zwei verschiedene Ansichten, bei welchen die Anschlussbaugruppe entlang ihrer Haupterstreckungsrichtung geschnitten ist.
Fig. 6 ist eine Schnittansicht eines Ventils zum Verschließen des Zulaufs des Wasserfilters.
Fig. 7 bis Fig. 9 sind perspektivische Detailansichten der Anschlussbaugruppe im Bereich der Verriegelung für den Wasserfilter.
Fig. 10 und Fig. 11 sind perspektivische Ansichten des Betätigungsorgans für die Verriegelung.
Fig. 12 ist eine perspektivische Ansicht des Wasserfilters mit.

### Detaillierte Beschreibung der Zeichnungen

Fig. 1 zeigt in einer perspektivischen Detailansicht eine Anschlussbaugruppe 300 mit einem Wasserfilter 100.

Die beschriebene Verriegelungstechnologie des Wasserfilters 100 kann für alle Arten von Wasserbehandlungseinrichtungen verwendet werden.

Hierzu zählen beispielsweise alle Arten von Wasserfiltern, zu denen im Sinne der Erfindung auch Filter gehören, die ein Ionenaustauschermaterial zum Enthärten des Wassers oder ein Material enthalten, um das Wasser gezielt aufzumineralisieren.

Neben Wasseraufbereitungseinrichtungen, bei denen das aufzubereitende Wasser ein Filterbett oder einen in einem Gehäuse eingebauten Filter passiert, bezieht sich die Erfindung aber auch beispielsweise auf mittels UV-Licht wirkende Wasserbehandlungseinrichtungen, sowie auf oxidativ wirkende Wasserbehandlungseinrichtungen, wie insbesondere eine Chlordosierung oder einen Ozongenerator.

Die beschriebene Anschlusstechnologie wird insbesondere für Wasseraufbereitungseinrichtungen in Haushalt und Industrie verwendet.

Der Wasserfilter 100 ist insbesondere als Filter mit einem Innenvolumen von 50 ml bis 10 l ausgebildet.

In diesem Ausführungsbeispiel umfasst die Anschlussbaugruppe 300 auf ihrer Oberseite einen Eingang 301 und einen Ausgang 302 zum Inline-Anschluss in eine bauseitige unter Druck stehende Wasserleitung.

Vorzugsweise wird die Anschlussbaugruppe 300 in der hier dargestellten Position verbaut.

Zum Entlüften sollte der Filter vorzugsweise in vertikaler Lage positioniert sein.

Das über den Eingang 301 einströmende Wasser passiert den Wasserfilter 100, um am Ausgang 302 wieder ausgeleitet zu werden.

Es versteht sich, dass dies nur eine beispielhafte Verwendung ist, für die die beschriebene Verriegelungstechnologie zwar optimal geeignet, nicht aber zwangsläufig benutzt werden muss.

Um den Wasserfilter 100 herauszunehmen, umfasst die Anschlussbaugruppe 300 in diesem Ausführungsbeispiel ein auf der dem Eingang abgewandten Seite des Filter 100 angeordnetes Betätigungsorgan 370, welches einen Hebel umfasst, der in Bezug auf die Längsachse L auf einer ersten Position, wie hier dargestellt, in eine zweite Position drehbar ist.

Sodann ist der Wasserfilter 100 entriegelt und kann herausgenommen werden.

In diesem Ausführungsbeispiel kann, wie im Folgenden noch im Detail erläutert wird, der Wasserfilter 100 herausgenommen werden, ohne dass eine bauseitige Wasserleitung geschlossen werden muss.

Über automatisch schließende Ventile im Zulauf des von Wasserfilters 100 wird ein Herausströmen von Wasser während der Entnahme verhindert.

Weiter verhindert eine Rücklaufsperre das Ausfließen des nach dem Ausgang 302 in der Wasserleitung stehenden Wassers.

Die Anschlussbaugruppe kann auch ein Gehäuse mit einer Kabeldurchführung 304 umfassen, über welche eine in dem Gehäuse integrierte Elektronik (nicht dargestellt) mit Spannung versorgt wird.

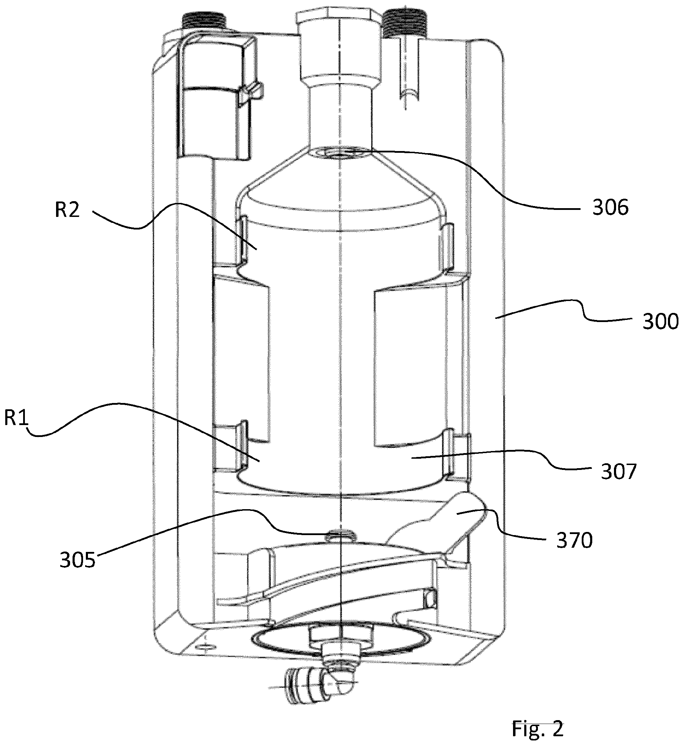

Fig. 2 ist eine perspektivische Ansicht der Anschlussbaugruppe 300 ohne Wasserfilter .

In der in Fig. 2 gezeigten CAD-Darstellung ist der Wasserfilter 100 lediglich ausgeblendet.

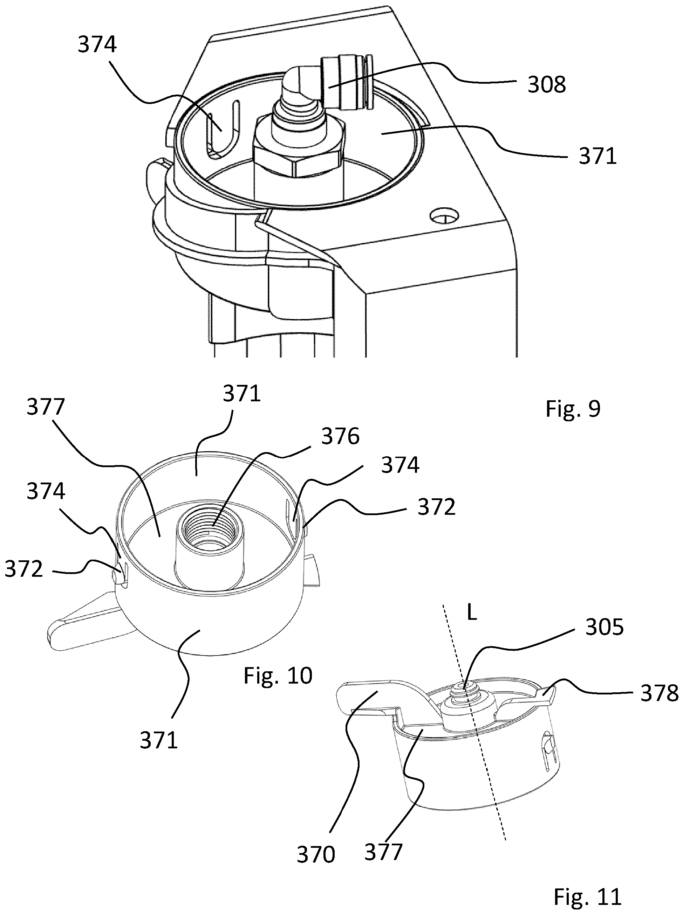

Der Wasserfilter 100 wird über die Anschlusstücke 305 und 306 verriegelt, indem die Anschlussstücke 305 und 306 axial in Bezug auf ihre Mittelachse L aufeinander zubewegt werden (siehe hierzu Fig. 11).

In diesem Ausführungsbeispiel wird dazu das Anschlussstück 305 durch Drehen des als Hebel ausgebildeten Betätigungsorgans 370 in die hier dargestellte erste Stellung nach oben geschoben.

Das Anschlussstück 306 dient dabei dem Anschließen des Ausgangs des Wasserfilters 100, und das Anschlussstück 305 dient als Anschluss für den Eingang.

Um den Wasserfilter 100 bequem einzusetzen und herauszunehmen, umfasst die Anschlussbaugruppe 300 ein Gehäuse mit einer Aufnahme 307, die derart ausgebildet ist, dass der in die Aufnahme eingesetzte Wasserfilter 100 mit seinem Eingang und seinem Ausgang axial in Bezug auf die Achse L zu den Anschlussstücken 305 und 306 ausgerichtet ist.

In diesem Ausführungsbeispiel ist die Aufnahme 307 ringsegmentförmig ausgebildet und umfasst zwei voneinander beabstandete Ringsegmente R1 und R2.

Aufgrund der konischen Ausgestaltung des Endes der Anschlussstücke 305 und 306 werden die Anschlussstücke auch bei eventuellen vorhandenen Lagetoleranzen in die als Rohrstück ausgebildeten Anschlüsse 101, 102 des Wasserfilters 100 geführt.

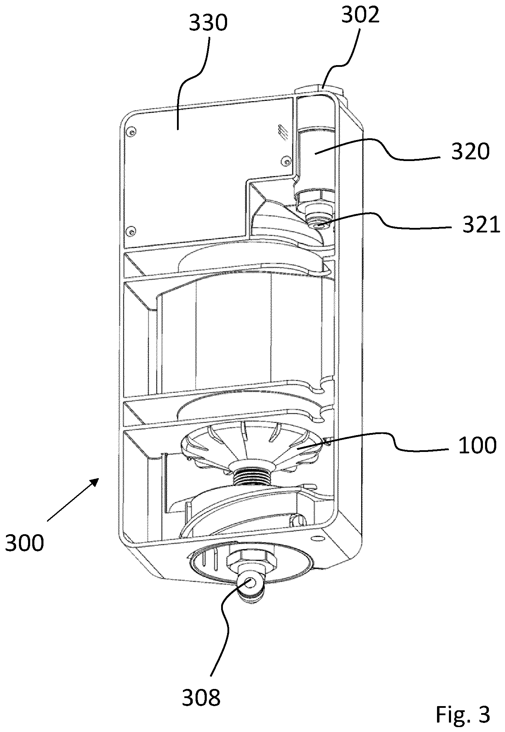

Fig. 3 ist eine perspektivische Ansicht der Rückseite der Anschlussbaugruppe 300. Die dargestellte Rückseite ist der der in Fig. 2 gezeigten Vorderseite gegenüberliegende Außenseite der Anschlussbaugruppe 300. Diese kann insbesondere dazu ausgebildet sein, um an einer bauseitigen Wand (nicht dargestellt) befestigt zu werden.

In diesem Ausführungsbeispiel umfasst die Anschlussbaugruppe einen Wasserzähler 320 mit dem Anschluss 321, welcher sich strömungsseitig vor dem Ausgang 302 befindet.

Ein Signalausgang des Wasserzählers 320 ist mit einer Elektronik auf der angrenzend eingebauten Platine 330 verbunden.

Über die Elektronik (nicht im Detail dargestellt) wird das Signal des Wasserzählers 320 verarbeitet und ein notwendiger Austausch des Wasserfilters 100 kann basierend auf Basis der gezählten gefilterten Wassermenge angezeigt werden.

Vorzugsweise erfolgt dies drahtlos, beispielsweise über ein WLAN (Wireless Area Network).

Ein notwendiger Austausch des Filters kann insbesondere durch ein Programm (App) auf einem drahtlosen Mobilgerät angezeigt werden.

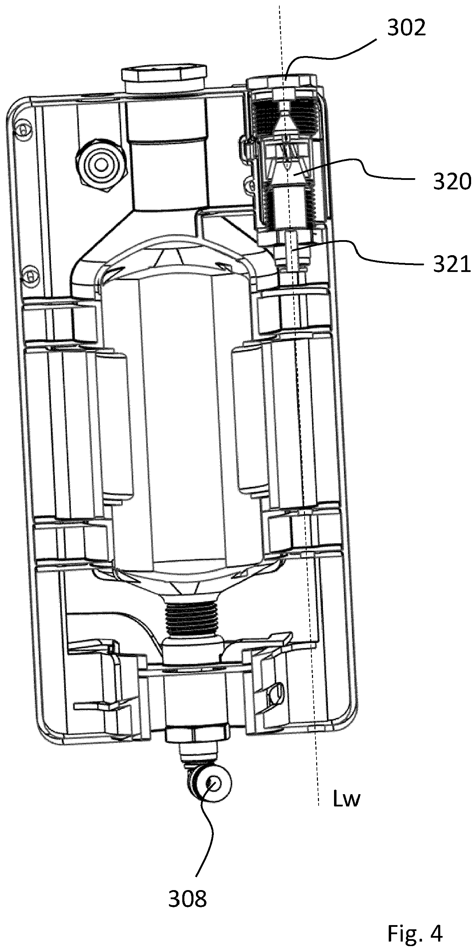

Fig. 4 ist eine Schnittansicht der Anschlussbaugruppe, wobei der Schnitt durch den Wasserzähler 320 entlang seiner Längsachse Lw verläuft.

Ein Gehäuse des Wasserzählers 320 umfasst den Ausgang 302 der Anschlussbaugruppe.

Zwischen Eingang 321 und Ausgang 302 ist ein Turbinenrad in Form einer Axialturbine angeordnet, welches die Wassermenge zählt.

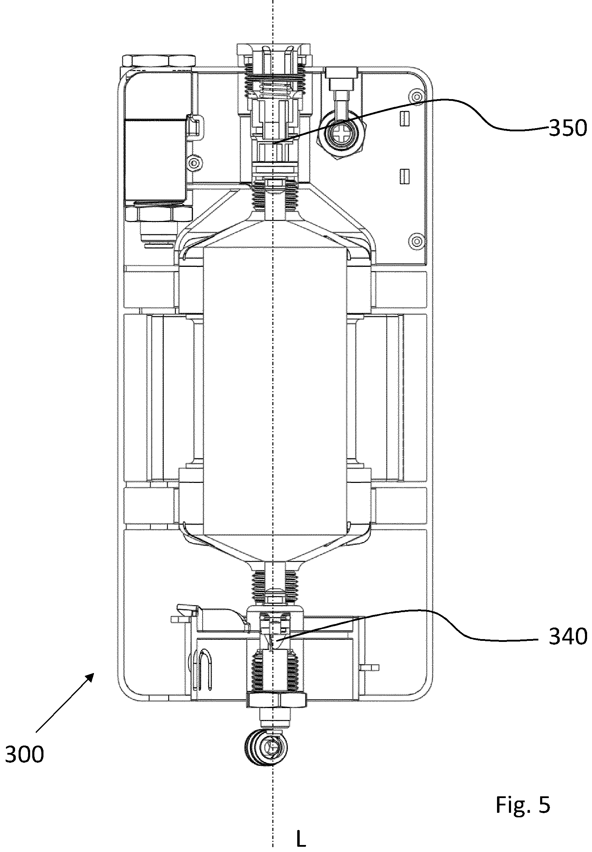

Fig. 5 ist eine weitere Schnittansicht der Anschlussbaugruppe 300 entlang der Mittelachse L des Wasserfilters 100.

Eingangsseitig ist ein Ventil 340 angeordnet, welches sich selbständig verschließt, wenn der Wasserfilter 100 entriegelt wird.

Ausgangsseitig ist eine Rücklaufsperre 350 vorhanden, welche verhindert, dass die nach dem Wasserfilter 100 sich anschließenden Leitungsstücke nach dessen Entnahme entleeren, so dass dieses Wasser aufgefangen werden müsste.

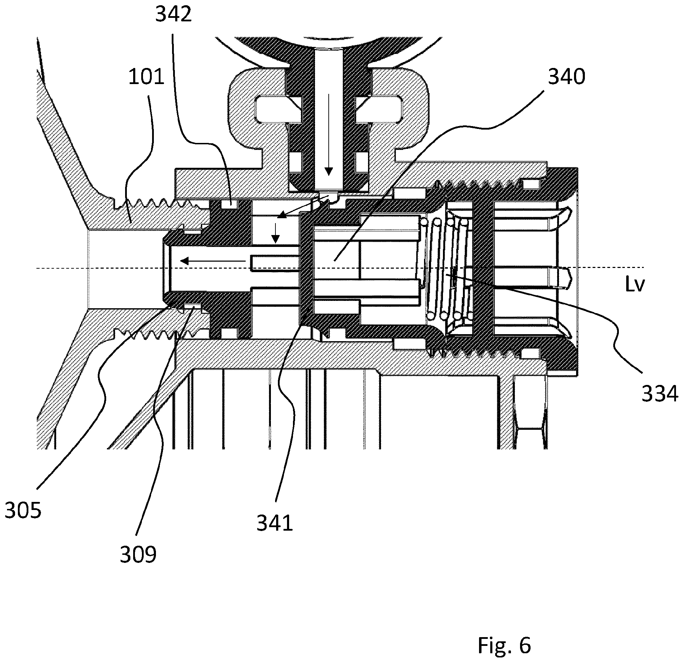

Dies ist im Detail auch in der Schnittansicht gemäß Fig. 6 dargestellt, einer Detaildarstellung eines Längsschnitts des Bereichs des Ventils 340, welches sich verschließt, wenn der Wasserfilter 100 entriegelt wird.

Das Ventil 340 umfasst einen Ventilkörper 341, welcher eine seitliche Nut 342 aufweist, in die eine Radialdichtung, beispielsweise ein O-Ring, eingesetzt werden kann (nicht dargestellt) und so den Ventilkörper 341 gegenüber der angrenzenden Seitenwand abdichtet.

Das Anschlussstück 305 wird gegen die Feder 334 axial entlang der Längsachse Lv des Ventils 340 in die hier dargestellte Position verschoben, wenn der Eingang 101 des Wasserfilters 100 durch Drehen am Betätigungsorgan 370 und die damit einhergehende Axialverschiebung des gegenüberliegenden Anschlussstücks 306 verschoben wird (vgl. Fig. 2).

So wird direkt seitlich ein Kanal freigegeben, durch den Wasser in den Wasserfilter 100 strömen kann. Der Weg des einströmenden Wassers ist durch Pfeile gekennzeichnet.

Gleichzeitig ist der Wasserfilter 100 aufgrund der Spannung der Feder 334 zwischen den Anschlusstücken eingespannt.

Der Eingang 101 (sowie auch der Ausgang) des Wasserfilters 100 ist als Rohrstück ausgebildet.

Das Anschlussstück 305, welches vorne konisch ausgebildet ist, taucht in das Rohrstück des Eingangs 101 ein und ist über eine Radialdichtung, die in die Nut 309 des Anschlussstücks 305, 306 eingesetzt ist, abgedichtet.

So ist der Wasserfilter 100 bereits auf beiden Seiten dicht mit der Anschlussbaugruppe verbunden, bevor das Ventil 340 öffnet.

In diesem Ausführungsbeispiel umfasst der als Rohrstück ausgebildete Eingang 101 ein Außengewinde, welches für den hier vorgesehenen Anschluss mittels der Axialverriegelung an den Anschlussstücken 305, 306 nicht notwendig ist, aber verwendet werden kann, um den Wasserfilter 100 anderweitig anzuschließen.

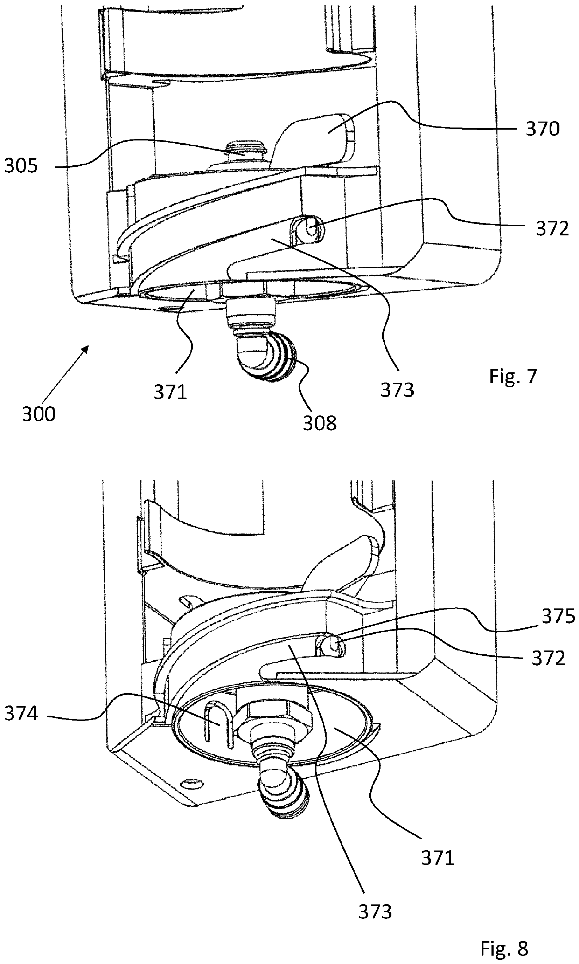

Fig. 7 ist eine perspektivische Detailansicht der Anschlussbaugruppe 300 im Bereich der Verriegelung für den Wasserfilter 100.

Das Anschlussstück 305 kann durch Drehen des als Hebel ausgebildeten Betätigungsorgans 370 axial in Bezug auf die Längsachse verschoben werden.

Die Drehbewegung wird durch eine Kulissenführung bereitgestellt.

Das Betätigungsorgan 370 umfasst ein Ringelement 371, welches kreiszylindrisch ausgebildet sein kann.

Vom Ringelement 371 aus erstreckt sich ein Stift 372 in eine schräge Nut 373, über die die Axialverschiebung beim Drehen des Betätigungsorgans 370 bereitgestellt wird.

An dem Ringelement 371 befindet sich auch der Anschluss 308, welcher zum Wasserzähler führt.

Dieser kann drehbar gegenüber dem Ringelement 371 ausgebildet sein.

Die Kulissenführung ist derart ausgebildet, dass sie in den beiden Endpositionen in der jeweiligen Stellung verharrt.

So kann der Wasserfilter 100 bequem eingesetzt oder herausgenommen werden.

Fig. 8 ist eine weitere perspektivische Ansicht der Anschlussbaugruppe 300 im Bereich der Verriegelung für den Wasserfilter 100.

Das Ringelement 371 umfasst zwei Stifte 372, welche sich gegenüberliegen und welche jeweils an einer federnden Halterung 374 angeordnet sind.

Durch Rückfedern der Stifte 372 kann das Ringelement 371 so auf einfache Weise in die Führungskulisse eingesetzt werden.

Die Führungskulisse 373 hat am Ende 375 ihrer schrägen Nut keine Steigung mehr, so dass auch bei aufgesetztem Filter sich das Ringelement 371 nicht aufgrund des in der Führungskulisse 373 geführten Stiftes 372 verschiebt.

Fig. 9 ist eine weitere perspektivische Ansicht des Ringelements 371, welcher in diesem Ausführungsbeispiel topfförmig ausgebildet ist.

Mittig in dem durch das Ringelement 371 und eine das Ringelement 371 verschließende Wand gebildeten Topf erstreckt sich ein Rohrstück zum Anschluss 308.

Der Anschluss 308 ist in diesem Ausführungsbeispiel abgewinkelt ausgebildet.

Fig. 10 und Fig. 11 sind perspektivische Ansichten des Betätigungsorgans 370 mit dem Ringelement 371.

Ein Gewinde 376 des axial angeordneten Rohrstücks nimmt im zusammengebauten Zustand (siehe Fig. 9) den Anschluss 308 auf.

Dargestellt sind weiter die beiden sich gegenüberliegenden Stifte 372, welche federnd über ihre jeweiligen Halterungen 374 aufgehängt sind.

Der Boden dieser topfförmigen Ausgestaltung ist als Wand 377 ausgebildet, von welcher auf der in Fig. 10 gezeigten Öffnung gegenüberliegenden Seite, wie in Fig. 21 dargestellt, das Anschlussstück 305 abgeht.

Gegenüber dem als Hebel ausgebildeten Betätigungsorgan 370 ist eine Führung 378 in Form eines sich radial erstreckenden Stegs ausgebildet, welcher beim Verdrehen des Ringelements 371 in eine korrespondierende Nut des Gehäuses der Anschlussbaugruppe greifen kann, um so eine zusätzliche Führung zu bilden.

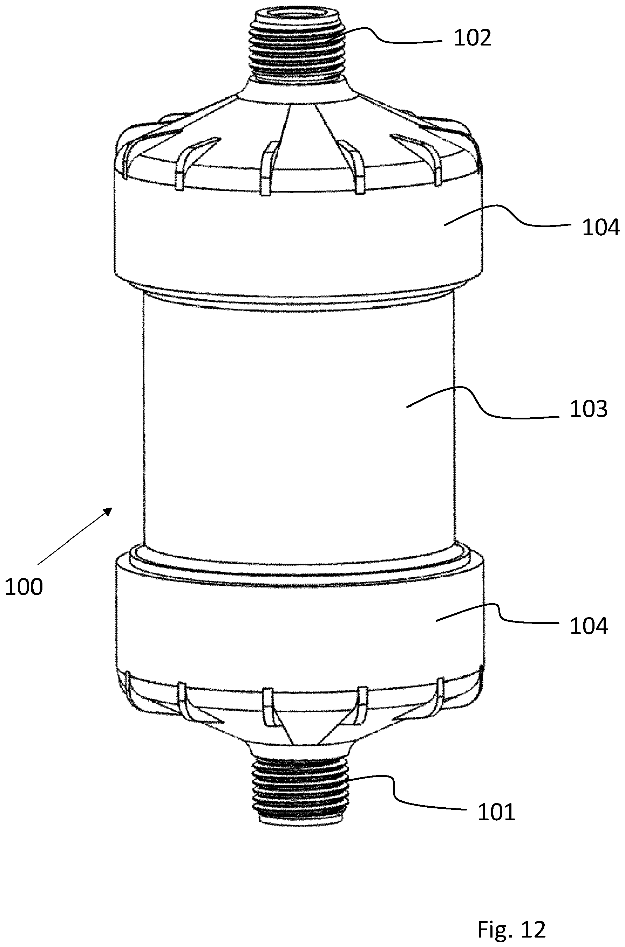

Fig. 12 zeigt eine Seitenansicht des beispielhaften Wasserfilters 100.

Dieser umfasst ein Gehäuse 103, welches abschnittweise als Rohrstück ausgebildet ist und welches beidseitig von einem Deckel 104 verschlossen ist.

Jeweils einer der Deckel 104 umfasst das Rohrstück, welches den Eingang 101 und den Ausgang 102 bildet. Eingang 101 und Ausgang 102 haben einen kleineren Durchmesser als das Gehäuse des Filters 100.

Durch die Erfindung konnte ein Wasserfilter bereitgestellt werden, welcher für verschiedene Verwendungen geeignet ist und sich bequem austauschen lässt.

### Bezugszeichenliste

- 100: Wasserfilter
- 101: Eingang
- 102: Ausgang
- 103: Gehäuse
- 104: Deckel
- 202: Anschluss
- 300: Anschlussbaugruppe
- 301: Eingang
- 302: Ausgang
- 304: Kabeldurchführung
- 305: Anschlussstück
- 306: Anschlussstück
- 307: Aufnahme für den Wasserfilter
- 308: Anschluss
- 309: Nut
- 320: Wasserzähler
- 321: Anschluss
- 330: Platine
- 340: Ventil
- 341: Ventilkörper
- 342: Nut
- 350: Rücklaufsperre
- 370: Betätigungsorgan
- 371: Ringelement
- 372: Stift
- 373: Führungshülse
- 374: Halterung
- 375: Ende der Führungskulisse
- 376: Gewinde
- 377: Wand
- 1. 378: Führung

## Patentansprüche

1. Anschlussbaugruppe (300) für einen Wasserfilter (100), umfassend zwei sich auf einer Achse gegenüberliegende Anschlussstücke (305, 306), wobei zumindest ein Anschlussstück (305, 306) über ein Betätigungsorgan (370) axial verschiebbar ausgebildet ist, um den Wasserfilter (100) anzuschließen und gleichzeitig zu fixieren, wobei eine Drehbewegung des Betätigungsorgans (370) in eine Axialverschiebung des Anschlussstücks (305, 306) umgesetzt wird, **dadurch gekennzeichnet, dass** das Anschlussstück (305, 306), welches den Eingang (101) des Wasserfilters (100) bildet, ein Ventil (340) umfasst, welches durch Verriegeln des Wasserfilters (100) geöffnet wird, wobei ein Anschlussstück (305, 306) zusammen mit dem Betätigungsorgan (370) drehbar ausgebildet ist, wobei die Drehbewegung über eine Führungskulisse, in die Axialverschiebung umgesetzt wird, und wobei zum Öffnen und Schließen der Anschlussbaugruppe (300) das Betätigungsorgan (370) jeweils um weniger als 360° verdrehbar ausgebildet ist.

2. Anschlussbaugruppe (300) nach Anspruch 1, **dadurch gekennzeichnet, dass** die Drehbewegung über eine schräg zum Betätigungsorgan (370) stehende Nut (309), in die Axialverschiebung umgesetzt wird.

3. Anschlussbaugruppe (300) nach einem der vorstehenden Ansprüche, **dadurch gekennzeichnet, dass** zum Öffnen und Schließen der Anschlussbaugruppe (300) das Betätigungsorgan (370) jeweils um weniger als 180°, besonders bevorzugt weniger als 150° und/oder mehr als 20°, bevorzugt mehr als 50°, besonders bevorzugt mehr als 90° verdrehbar ausgebildet ist.

4. Anschlussbaugruppe (300) nach einem der vorstehenden Ansprüche, **dadurch gekennzeichnet, dass** die Anschlussstücke (305, 306) konisch ausgebildet sind.

5. Anschlussbaugruppe (300) nach einem der vorstehenden Ansprüche, **dadurch gekennzeichnet, dass** die Anschlussstücke (305, 306) eine Radialdichtung, insbesondere einen in einer Nut (309) sitzenden O-Ring, umfassen.

6. Anschlussbaugruppe (300) nach einem der vorstehenden Ansprüche, **dadurch gekennzeichnet, dass** das Ventil (340) einen Ventilkörper (341) umfasst, welcher durch eine vom Wasserfiltereingang (101) bewirkte Axialverschiebung das Ventil (340) öffnet.

7. Anschlussbaugruppe (300) nach einem der vorstehenden Ansprüche, **dadurch gekennzeichnet, dass** das Anschlussstück (305, 306) des Eingangs (101) des Wasserfilters (100), zusammen mit dem Betätigungsorgan (370) drehbar ausgebildet ist.

8. Anschlussbaugruppe (300) nach dem vorstehenden Anspruch, **dadurch gekennzeichnet, dass** das Betätigungsorgan (370) ein drehbares Ringelement (371), insbesondere ausgebildet als Kreiszylinder, umfasst, wobei das Anschlussstück (305, 306) in einer sich radial im Ringelement (371) ersteckenden Wand (377) angeordnet ist.

9. Anschlussbaugruppe (300) nach einem der vorstehenden Ansprüche, **dadurch gekennzeichnet, dass** das Betätigungsorgan (370) einen sich radial erstreckende Hebel umfasst.

10. Anschlussbaugruppe (300) nach einem der vorstehenden Ansprüche, **dadurch gekennzeichnet, dass** strömungsseitig hinter dem Anschlussstück (305, 306) des Ausgangs (102) des Wasserfilters (100) eine Rücklaufsperre (350) angeordnet ist.

11. Wasserfilter (100) mit einer Anschlussbaugruppe (300) nach einem der vorstehenden Ansprüche.

## Claims

1. A connecting assembly (300) for a water filter (100), comprising two connecting pieces (305, 306), which are located opposite one another on an axis, wherein at least one connecting piece (305, 306) is formed so as to be axially displaceable via an actuation member (370) in order to connect and simultaneously fix the water filter (100), wherein a rotational movement of the actuation member (370) is converted into an axial displacement of the connecting piece (305, 306), **characterized in that** the connecting piece (305, 306), which forms the input (101) of the water filter (100), comprises a valve (340), which is opened by locking the water filter (100), wherein a connecting piece (305, 306), together with the actuation member (370), is formed so as to be capable of being rotated, wherein the rotational movement is converted into the axial displacement via a guide slot, and wherein the actuation member (370) is formed so as to be capable of being rotated by less than 360° in each case for opening and closing the connecting assembly (300).

2. The connecting assembly (300) according to claim 1, **characterized in that** the rotational movement is converted into the axial displacement via a groove (309), which is oblique to the actuation member (307).

3. The connecting assembly (300) according to any one of the preceding claims, **characterized in that** the actuation member (370) is formed so as to be capable of being rotated by less than 180°, particularly preferably less than 150° and/or more than 20°, preferably more than 50°, particularly preferably more than 90° in each case for opening and closing the connecting assembly (300).

4. The connecting assembly (300) according to any one of the preceding claims, **characterized in that** the connecting pieces (305, 306) are formed conically.

5. The connecting assembly (300) according to any one of the preceding claims, **characterized in that** the connecting pieces (305, 306) comprise a radial seal, in particular n O-ring, which sits in a groove (309).

6. The connecting assembly (300) according to any one of the preceding claims, **characterized in that** the valve (340) comprises a valve body (341), which opens the valve (340) by means of an axial displacement effected by the water filter input (101).

7. The connecting assembly (300) according to any one of the preceding claims, **characterized in that** the connecting piece (305, 306) of the input (101) of the water filter (100), together with the actuation member (370), is formed so as to be capable of being rotated.

8. The connecting assembly (300) according to the preceding claim, **characterized in that** the actuation member (370) comprises a rotatable ring element (371), in particular formed as circular cylinder, wherein the connecting piece (305, 306) is arranged in a wall (377), which extends radially in the ring element (371).

9. The connecting assembly (300) according to any one of the preceding claims, **characterized in that** the actuation member (370) comprises a lever, which extends radially.

10. The connecting assembly (300) according to any one of the preceding claims, **characterized in that** a backstop (350) is arranged downstream from the connecting piece (305, 306) of the output (102) of the water filter (100).

11. A water filter (100) comprising a connecting assembly (300) according to any one of the preceding claims.

## Revendications

1. Module de raccordement (300) pour un filtre à eau (100), comprenant deux pièces de raccordement (305, 306) opposées sur un axe, au moins une pièce de raccordement (305, 306) étant conçue de manière à pouvoir coulisser axialement par un organe d'actionnement (370) pour raccorder et fixer simultanément le filtre à eau (100), un mouvement de rotation de l'organe d'actionnement (370) étant transformé en un coulissement axial de la pièce de raccordement (305, 306), **caractérisé en ce que** la pièce de raccordement (305, 306) qui forme l'entrée (101) du filtre à eau (100) comprend une vanne (340) qui s'ouvre par le verrouillage du filtre à eau (100), une pièce de raccordement (305, 306) étant conçue de manière à pouvoir pivoter avec l'organe d'actionnement (370), le mouvement de rotation étant transformé en coulissement axial par une coulisse de guidage, et l'organe d'actionnement (370) étant conçu de manière à pouvoir pivoter de moins de 360° pour l'ouverture et la fermeture du module de raccordement (300).

2. Module de raccordement (300) selon la revendication 1, **caractérisé en ce que** le mouvement de rotation est transformé en coulissement axial par une rainure (309) inclinée par rapport à l'organe d'actionnement (370).

3. Module de raccordement (300) selon l'une des revendications précédentes, **caractérisé en ce que** l'organe d'actionnement (370) est conçu de manière à pouvoir pivoter respectivement de moins de 180°, plus préférablement de moins de 150° et/ou de plus de 20°, préférablement de plus de 50°, plus préférablement de plus de 90°, pour l'ouverture et la fermeture du module de raccordement (300).

4. Module de raccordement (300) selon l'une des revendications précédentes, **caractérisé en ce que** les pièces de raccordement (305, 306) sont de forme conique.

5. Module de raccordement (300) selon l'une des revendications précédentes, **caractérisé en ce que** les pièces de raccordement (305, 306) comprennent un joint d'étanchéité radial, en particulier un joint torique placé dans une rainure (309).

6. Module de raccordement (300) selon l'une des revendications précédentes, **caractérisé en ce que** la vanne (340) comprend un corps de vanne (341) qui ouvre la vanne (340) par un coulissement axial induit par l'entrée du filtre à eau (101).

7. Module de raccordement (300) selon l'une des revendications précédentes, **caractérisé en ce que** la pièce de raccordement (305, 306) de l'entrée (101) du filtre à eau (100) est conçue de manière à pouvoir pivoter avec l'organe d'actionnement (370).

8. Module de raccordement (300) selon la revendication précédente, **caractérisé en ce que** l'organe d'actionnement (370) comprend un élément annulaire rotatif (371), en particulier conçu comme un cylindre circulaire, la pièce de raccordement (305, 306) étant disposée dans une paroi (377) s'étendant radialement dans l'élément annulaire (371) .

9. Module de raccordement (300) selon l'une des revendications précédentes, **caractérisé en ce que** l'organe d'actionnement (370) comprend un levier s'étendant radialement.

10. Module de raccordement (300) selon l'une des revendications précédentes, **caractérisé en ce qu'**un clapet anti-retour (350) est disposé côté écoulement, en aval de la pièce de raccordement (305, 306) de la sortie (102) du filtre à eau (100).

11. Filtre à eau (100) avec un module de raccordement (300) selon l'une des revendications précédentes.
